# EUROPÄISCHE PATENTSCHRIFT

(11) **EP 0 794 364 B1**
(45) Veröffentlichungstag und Bekanntmachung des Hinweises auf die Patenterteilung: **10.01.2001**
(21) Anmeldenummer: 97102999.6
(22) Anmeldetag: 25.02.1997
(51) Int. Cl.: F16H 63/30

(54) **Schaltvorrichtung für ein Zahnräderwechselgetriebe**
Shift actuator for a change-speed gearbox
Dispositif de commande d'une boîte de vitesses

(30) Priorität: 09.03.1996 DE 19609209
(43) Veröffentlichungstag der Anmeldung: 10.09.1997
(73) Patentinhaber: DaimlerChrysler AG, 70567 Stuttgart (DE)
(72) Erfinder: Ebinger, Thilo, 70327 Stuttgart (DE); Neubauer, Hans-Jürgen, 73630 Remshalden (DE); Schetter, Martin, 74354 Besigheim (DE)

(56) Entgegenhaltungen:
- EP-A- 0 058 964
- DE-A- 2 456 962
- DE-A- 3 446 357
- DE-A- 4 118 931
- DE-A- 4 239 028
- FR-A- 1 566 552
- PATENT ABSTRACTS OF JAPAN vol. 95, no. 3, 28.April 1995 & JP 06 337065 A (ISEKI & CO LTD), 6.Dezember 1994,

## Beschreibung

Die Erfindung bezieht sich auf eine Schaltvorrichtung nach dem Oberbegriff von Patentanspruch 1.

Bei einer gattungsbildenden Schaltvorrichtung der eingangs genannten Art (DE 41 18 931 A1) ist der Schaltgehäuseeinsatz dazu verwendet, neben den beiden vorderen Lagern für die axial verschiebbare Anordnung von zwei Schaltstangen noch die Rasteneinrichtungen für die Stellungen der Schaltstangen, eine Sperreneinrichtung für die Sperrung der jeweils nicht betätigten Schaltstange sowie einen Zwischensperrbolzen aufzunehmen, welch letzterer mit einem schwenkbaren Zwischensperrhebel zusammenarbeitet, der mit zwei Schaltschwingen so in Wirkung steht, daß durch die Betätigung einer Schaltstange oder einer Schaltschwinge in eine einem eingerückten Zustand der zugehörigen Zahnradkupplung entsprechende Gangstellung zwangsläufig die übrigen Schaltstangen und Schaltschwingen gegenüber dem Getriebegehäuse unverrückbar festgelegt sind.

Bei dieser bekannten Schaltvorrichtung sind zwei Schaltschwingen verwendet, von denen die eine unmittelbar in dem ausgangsseitigen Gehäuseteil des Getriebegehäuses und die andere unmittelbar in dem eingangsseitigen Gehäuseteil des zweigeteilten Getriebegehäuses schwenkbar gelagert ist.

Bei Schaltvorrichtungen dieser Art mit einer oder mehreren Schaltschwingen besteht oft das Problem, daß mindestens eine Schaltschwinge "im Freien", d. h., ohne ihre dem Getriebegehäuse zugeordnete Lagerung auf die zusammen mit den Getriebewellen und den Zahnrädern in dem einen Gehäuseteil vormontierte Schaltschiebemuffe aufgesetzt werden muß und dann, nach der Montage des anderen Gehäuseteiles, möglichst noch so positioniert sein sollte, daß sich die Lagerbolzen der Schwenklager auch noch montieren lassen.

Aus der DE 34 46 357 A1 ist eine gattungsfremde Anordnung zum Anbringen einer Zahnrad - Schalteinrichtung in einem Getriebe mit einer Mehrzahl von Schaltstangen bekannt, die eine entsprechende Mehrzahl von Schaltgabeln tragen, welche gegenüber einem Getriebegehäuse zur Betätigung einer Mehrzahl von Kupplungen axial bewegbar sind, um alternative Zahnräder zum Kämmen zu bringen und dem Getriebe unterschiedliche Übersetzungsverhältnisse zu geben.Bei dieser bekannten Anordnung sind im Gegensatz zu einer gattungsgemäßen Schaltvorrichtung ausschließlich Schaltgabeln verwendet, welche axial verschiebbar im Getriebegehäuse angeordnet sind, wobei letzteres zudem noch dreigeteilt ist.In der betreffenden Druckschrift wird es als Nachteil angesehen, daß das durch Gießen hergestellte Getriebegehäuse für die Lageraugen und deren nachfolgende spanabhebende Bearbeitung an diesen Stellen mitgegossener Mateialanhäufungen bedarf, welche jedoch zu Spannungskonzentrationen führten, die die Festigkeit herabsetzten. Um diesen Nachteil zu vermeiden oder zu verringern, ist bei dieser bekannten Anordnung vorgesehen, daß eine insbesondere einstückig gestaltete Lagerkonsole an dem Getriebegehäuse lösbar angebracht und von dem Getriebegehäuse umschlossen ist und mit Lagern für die Schaltstangen ausgebildet ist, wobei diese zumindest teilweise von der Lagerkonsole getragen sind.
Aus der DE 24 56 962 A1 ist eine entweder für die Verwendung von ausschließlich Schaltgabeln oder für die Verwendung von ausschließlich Schaltschwingen ausgebildete gattungsfremde Schaltvorrichtung für Wechselgetriebe insbesondere für Kraftfahrzeuge in Vorgelegebauart bekannt, bei der eine Schaltwelle und formschlüssige Gangschaltkupplungen, vor allem Schaltmuffen, im Getriebegehäuse axial verschiebbar und drehbar gelagert sind.Das Getriebegehäuse ist im weiteren Gegensatz zum Gattungsbegriff in zwei parallelen Trennebenen,welche parallel zu den Getriebewellen liegen, in drei Gehäuseteile unterteilt,und zwar in einen die Getriebewellen und die Schaltschwingen lagernden Gehäuseteil, in einen die Schaltstangen lagernden Gehäusedeckel, und schließlich in einen auf den Gehäusedeckel aufsetzbaren Schaltdom zur Lagerung einer mit einem Schaltfinger die Schaltstangen betätigenden Schaltwelle.In dieser Druckschrift werden bei einer ausschließlich mit Schaltgabeln ausgerüsteten Schaltvorrichtung die infolge großer Reibverluste im Übertragungsmechanismus erfoderlichen hohen Bedienkräfte zur Durchführung eines Gangwechsels als nachteilig angesehen.Den nur mit Schaltschwingen arbeitenden Schaltvorrichtungen hafte gemäß dieser Druckschrift der Nachteil an, daß ein notwendiger oder nachträglicher Einbau, je nach Einsatz des Wechselgetriebes unter Verwendung von Teilen bekannter Schaltvorrichtungen bei dieser Ausführung nicht möglich sei. Um die genannten Nachteile zu vermeiden ,ohne die Schaltkräfte zu erhöhen, ist bei dieser bekannten Schaltvorrichtung die Ausgestaltung so getroffen, daß eine im Schaltdom gelagerte Schaltwelle mit einem drehfest angeordneten Schalthebel und Mitnehmer mit im Getriebegehäusedeckel geführten Schaltstangen eine kinematische Einheit bilden, wobei in den Schaltstangen eingebrachte Querbohrungen zur Aufnahme von Führungselementen dienen, um die triebliche Verbindung zu den Schaltschwingen,die mit gabelförmigen Nuten, in welche die Führungselemente eingreifen, herzustellen-jedoch bei Verwendung bekannter Schaltgabeln die Querbohrungen entfallen und die Schaltgabeln in an sich bekannter Weise auf den Schaltstangen befestigt werden. Bei einer weiteren gattungsfremden Schaltvorrichtung eines Wechselgetriebes für einen Traktor (Patent Abstracts of Japan; JP 0 633 7065 A1)werden zwei auf einer Ausgangswelle verschiebbar angeordnete Schaltschiebemuffen durch je eine Schaltgabel betätigt.Die Schaltgabeln sind axial verschiebbar in einem auf das Getriebegehäuse aufgesetzten Schaltgehäuse gelagert und durch Schaltnocken einer auch zur Lagerung der Schaltgabeln verwendeten Schaltwelle des Schaltgehäuses betätigbar.
Die der Erfindung zugrunde liegende Aufgabe besteht im wesentlichen darin, bei einer Schaltvorrichtung der eingangs genannten Art die Montage zu erleichtern.

Die erläuterte Aufgabe ist gemäß der Erfindung mit den kennzeichnenden Merkmalen von Patentanspruch 1 in vorteilhafter Weise gelöst.

Bei der Schaltvorrichtung nach der Erfindung bildet der Schaltgehäuseeinsatz mit den beiden Lagerkonsolen und der Traverse einen geschlossenen Rahmen, der die Schaltstange und die Schaltschwinge trägt. Die zur Betätigung von Schaltstange und Schaltschwinge in bekannter Weise verwendete Schaltwelle mit ihren Schaltfingern kann bei der Montage in einem Montagegestell oder ebenfalls in dem Schaltgehäuseeinsatz bei Vorteilen für die Montage gelagert werden.

Bei der Schaltvorrichtung nach der Erfindung wird der durch Schaltstange und Schaltschwinge komplettierte Schaltgehäuseeinsatz auf die Schaltschiebemuffen der Getriebewellen aufgesetzt und zusammen mit letzteren in den die Schaltstange lagernden Gehäuseteil eingeführt. Anschließend wird der Schaltgehäuseeinsatz an zwei Stellen gegenüber diesem Gehäuseteil festgelegt. Nach der Montage des anderen Gehäuseteiles trägt die Abstützung des Schaltgehäuseeinsatzes gegenüber diesem Gehäuseteil zur Ausrichtung des Schaltgehäuseeinsatzes gegenüber dem Getriebegehäuse bzw. gegenüber den Getriebewellen in vorteilhafter Weise bei.

Bei der Schaltvorrichtung nach der Erfindung ist die eingangs erläuterte Problematik bei der Montage der Schaltschwingen gegenstandslos geworden, weil die Schaltschwingen sich in den bei der Montage zunächst vor dem die Schaltstange lagernden Gehäuseteil des Getriebegehäuses plazierten Lagerkonsolen und damit automatisch nach Montage des anderen Gehäuseteiles auch an der richtigen Stelle des Getriebegehäuses befinden.

Eine vorteilhafte Ausgestaltung der Abstützung des Schaltgehäuseeinsatzes an dem anderen, zuletzt montierten Gehäuseteil des Getriebegehäuses bei der Schaltvorrichtung nach der Erfindung hat Patentanspruch 2 zum Gegenstand.

Eine vorteilhafte Ausgestaltung des unmittelbar an dem die Schaltstange lagernden Gehäuseteil des Getriebegehäuses festgelegten Teiles des Schaltgehäuseeinsatzes bei der Schaltvorrichtung nach der Erfindung hat Patentanspruch 3 zum Gegenstand.

Eine vorteilhafte Ausgestaltung der Befestigung zwischen der Lagerkonsole, dem Lagerschild und dem die Schaltstange lagernden Gehäuseteil des Getriebegehäuses bei der Schaltvorrichtung nach der Erfindung hat Patenanspruch 4 zum Gegenstand.

Die Patentansprüche 5 bis 8 sind auf die insbesondere baulich vorteilhafte Erweiterung der Montageeinheit "Schaltgehäuseeinsatz" durch die den Schaltelementen zugeordneten Rasteneinrichtungen bei der Schaltvorrichtung nach der Erfindung abgestellt.

Die Patentansprüche 9 und 10 sind auf die Ausbildung des Schaltgehäuseeinsatzes als ein in sich starrer, in Blechpreßtechnik, Feinschneide- und Blech-Umformtechnik herstellbarer Rahmen bei der Schaltvorrichtung nach der Erfindung abgestellt.

Die Patentansprüche 11 bis 15 sind auf eine Erweiterung der Schaltvorrichtung nach der Erfindung durch wenigstens eine weitere Schaltstange und/oder durch wenigstens eine weitere Schaltschwinge mit den zugehörigen Rasteneinrichtungen abgestellt.

Die Maßnahme nach Patentanspruch 16 zielt darauf ab, bei der Schaltvorrichtung nach der Erfindung die "innere Schaltung" als eine vormontierbare Baueinheit auszubilden, die beispielsweise als Zuliefererteil bei der Getriebefertigung komplett angeliefert und montiert wird.

Bei der Schaltvorrichtung nach der Erfindung ist eine Vormontageeinheit bis maximal zum Komplettumfang der Innenschaltung geschaffen, die alle Schaltstangen, Schaltschwingen, zugehörige Lagerungen und Rasteneinrichtungen sowie die Verriegelung nach Patentanmeldung EP-A-0 794 365 umfaßt.

Ausgenommen hiervon können gegebenenfalls Lager an den in Längsrichtung der Getriebewellen liegenden Enden des Schaltgehäuseeinsatzes sein, die sich problemlos und kostengünstig mit Bohrungen in der Hauptbearbeitungsrichtung des Getriebegehäuses verwirklichen lassen sowie u. U. Rasteneinrichtungen, die in andere, zwingend außen am Getriebegehäuse sitzende Elemente integriert werden können, beispielsweise in einen Rückfahrlichtschalter.

Bei der Schaltvorrichtung nach der Erfindung ist die Vormontageeinheit außerhalb des Getriebegehäuses montierbar und gegebenenfalls mit Hilfe eines "Trägers", d. h. einer Vorrichtung, die sich im Montage- bzw. im Zuliefererumlauf befindet, als Komplettumfang auf die Getriebewellen aufetzbar und mit letzteren in den die Schaltstangen lagernden Gehäuseteil des Getriebegehäuses einfügbar. Nach Festlegung des Schaltgehäuseeinsatzes an die Schaltstangen lagernden Gehäuseteil wird der "Träger" entfernt und wieder in den Montageumlauf gegeben.

Bei der Schaltvorrichtung nach der Erfindung sind alle Bearbeitungen in Getriebequerrichtung, die üblicherweise für Rasteneinrichtungen u. a. sowie für die Schwenklager der Schaltschwingen erforderlich wären, entfallen.

Bei der Schaltvorrichtung nach der Erfindung können alle Rasteneinrichtungen an den Lagerkonsolen und/oder am Lagerschild angeordnet sein.

Bei der Schaltvorrichtung nach der Erfindung können die den Schaltschwingen zugeordneten Rasteneinrichtungen auch auf die an den Schaltschwingen angelenkten schwenkbeweglichen Sperrglieder gemäß Patentanmeldung EP-A-0 794 365 arbeiten.

Bei der Schaltvorrichtung nach der Erfindung kann der Schaltgehäuseeinsatz auch zur Lagerung der Schaltwelle zur Betätigung der Schaltstangen und Schaltschwingen verwendet sein.

Das Prinzip eines geschlossenen rahmenförmigen Schaltgehäuseeinsatzes ist auch auf eine ausschließlich mit Schaltschwingen arbeitende Schaltvorrichtung anwendbar.

Das Prinzip eines zentralen Lagerschildes und dadurch die Bildung eines Modules ist auch bei einer ausschließlich mit Schaltstangen arbeitenden Schaltvorrichtung anwendbar.

Die Erfindung ist nachstehend anhand eines in der Zeichnung schematisch dargestellten Ausführungsbeispieles näher beschrieben.

In der Zeichnung bedeuten
- Fig. 1: ein prinzipielles Getriebeschema eines Zahnräderwechselgetriebes,

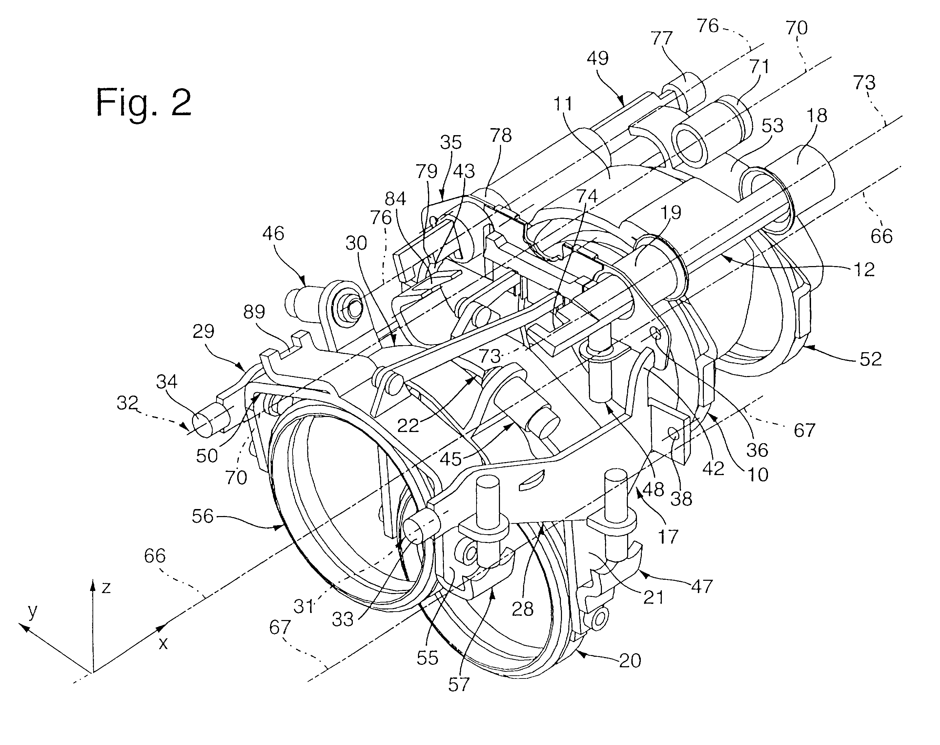

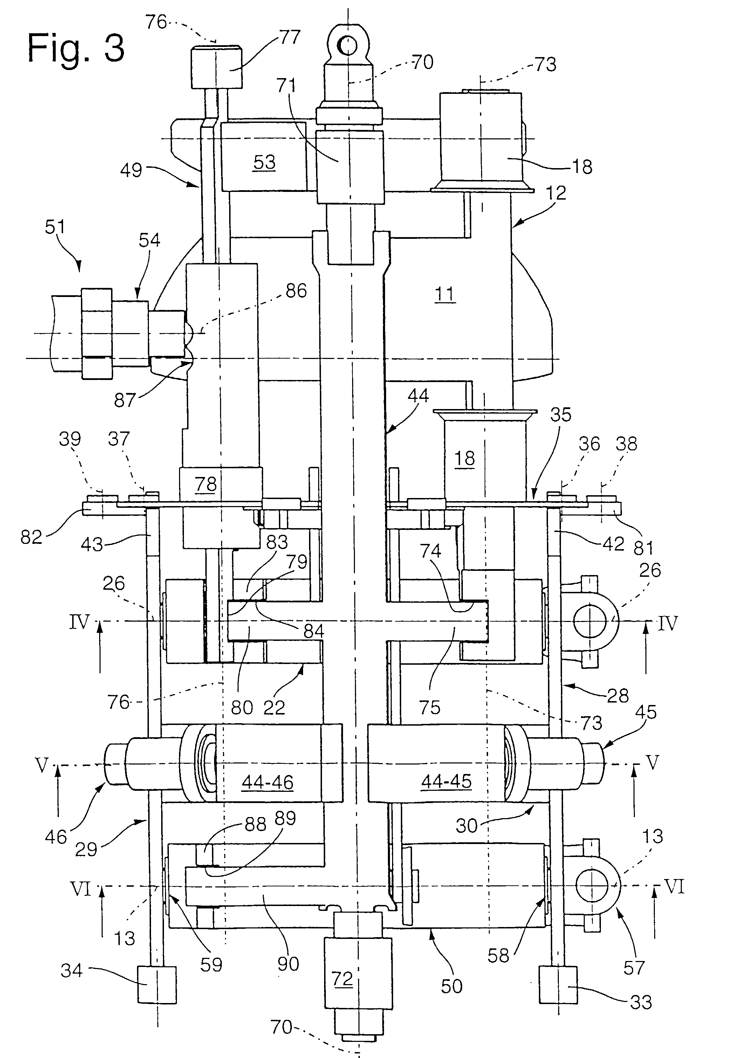

- Fig. 2: eine Schaltvorrichtung nach der Erfindung in einer Ausführung für ein Zahnräderwechselgetriebe gemäß Fig. 1 in einer perspektiven Darstellung, gesehen etwa in Pfeilrichtung II von Fig. 3,
- Fig. 3: die Schaltvorrichtung von Fig. 2 in einer Draufsicht,

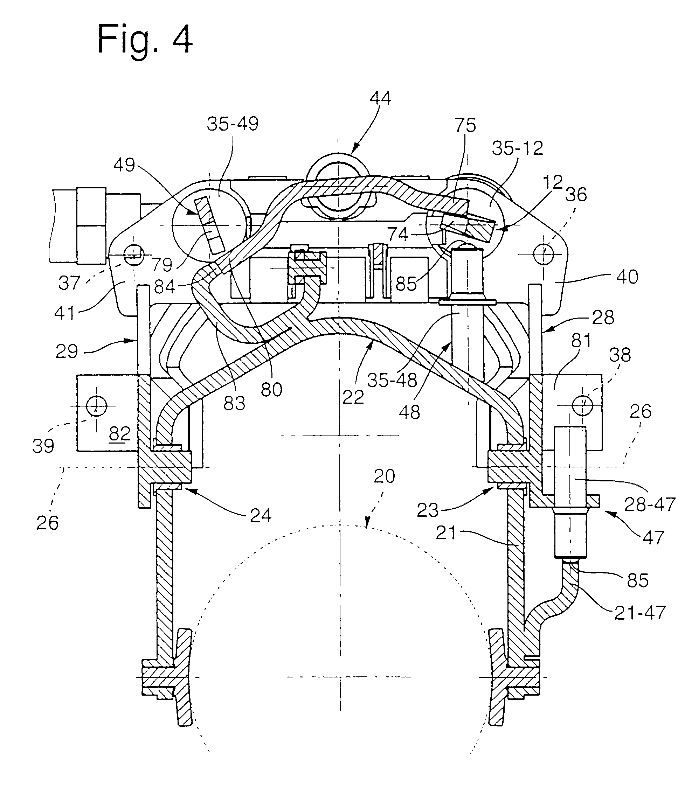

- Fig. 4: einen Schnitt durch die Schaltvorrichtung von Fig. 2 nach Linie IV-IV in Fig. 3,

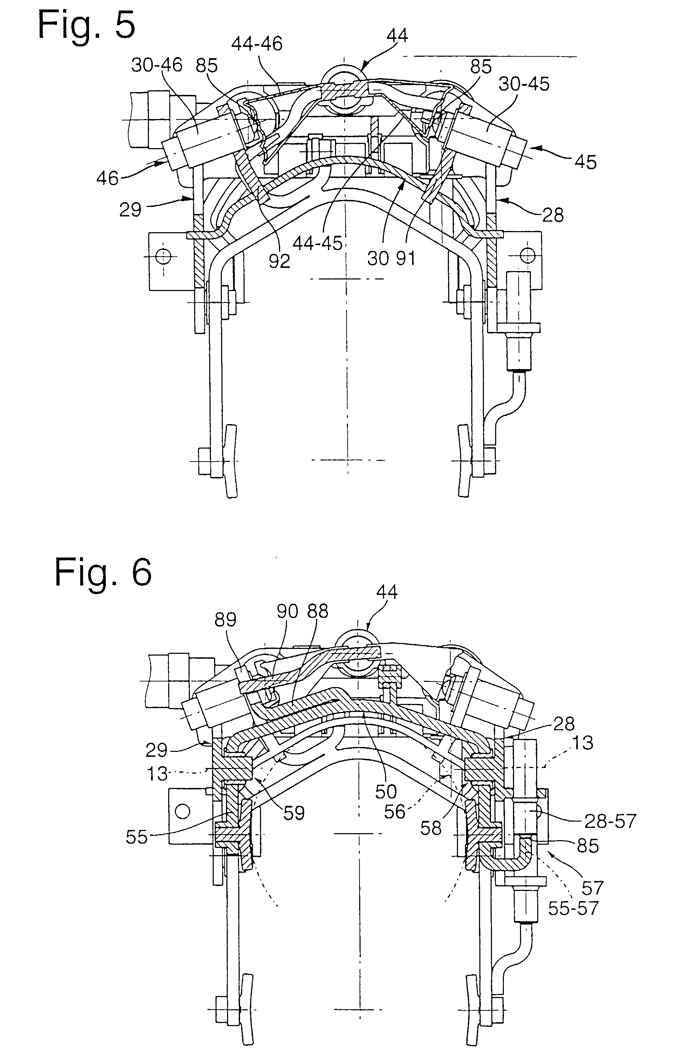

- Fig. 5: einen Schnitt durch die Schaltvorrichtung von Fig. 2 nach Linie V-V in Fig. 3,
- Fig. 6: einen Schnitt durch die Schaltvorrichtung von Fig. 2 nach Linie VI-VI in Fig. 3,

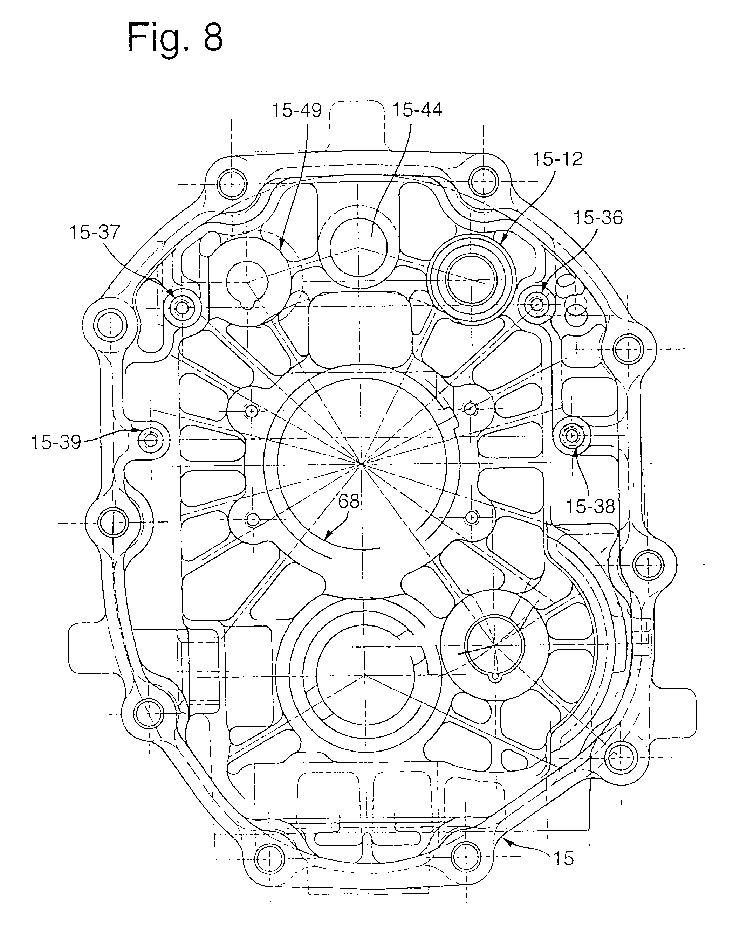

- Fig. 7: einen Längsschnitt durch das in Einzeldarstellung gezeigte Getriebegehäuse des Zahnräderwechselgetriebes von Fig. 1,
- Fig. 8: den die Schaltstangen der Schaltvorrichtung von Fig. 2 lagernden Gehäuseteil des Getriebegehäuses von Fig. 7 in einer Ansicht gemäß Pfeilrichtung VIII von Fig. 7, und

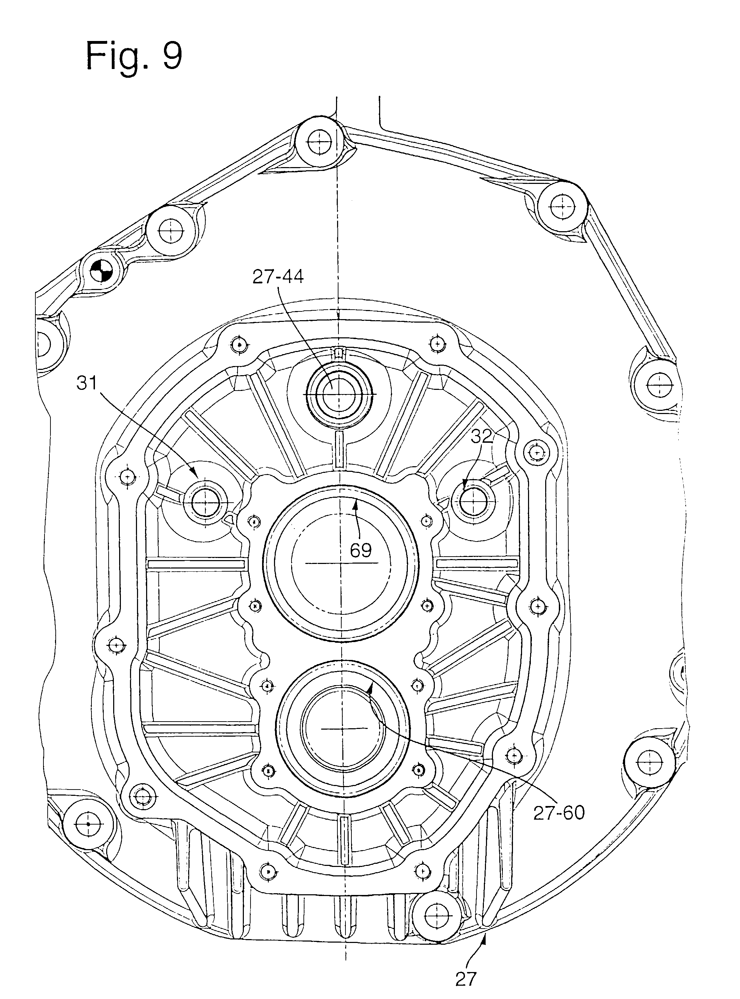

- Fig. 9: den die Schaltschwingen der Schaltvorrichtung von Fig. 2 aufnehmenden Gehäuseteil des Getriebegehäuses von Fig. 7 in einer Ansicht gemäß Pfeilrichtung IX von Fig. 7.

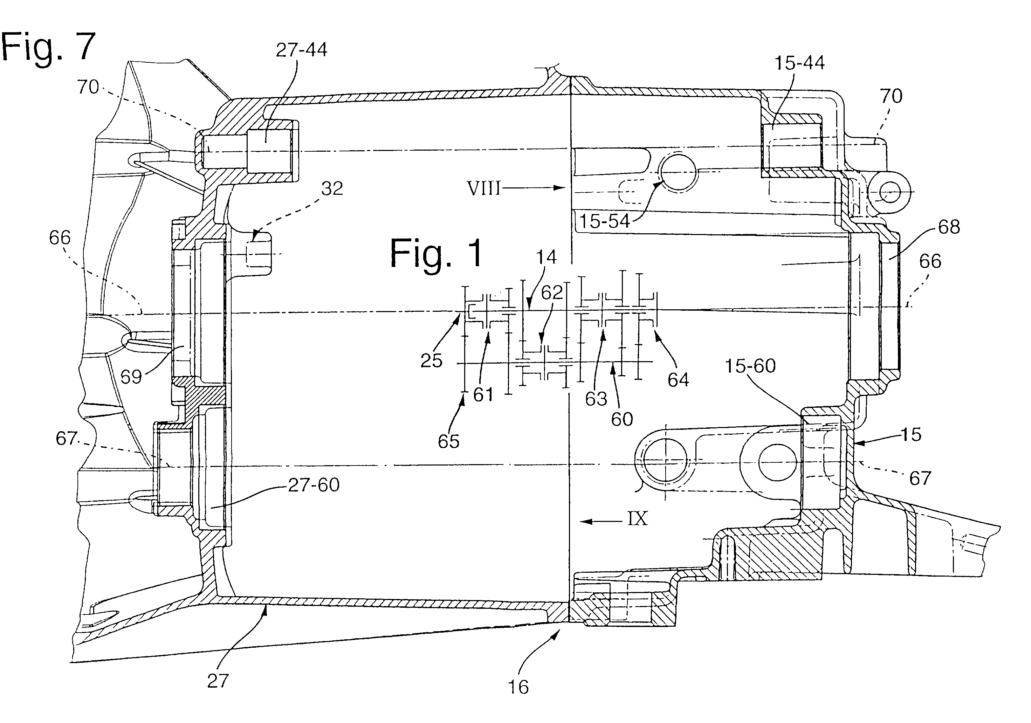

Gemäß Fig. 1 weist ein Zahnräderwechelgetriebe eine zu einer Eingangswelle 25 koaxiale Ausgangswelle 14 sowie eine parallele Vorgelegewelle 60 auf, wobei letztere in bekannter Weise durch eine Getriebekonstante in ständiger Antriebsverbindung mit der Eingangswelle 25 steht.

Eine auf der Ausgangswelle 14 angeordnete Wechsel-Zahnradkupplung 61 ist zum wahlweisen Kuppeln der Eingangswelle 25 oder eines Zahnrades mit der Ausgangswelle 14 über eine Schaltschiebemuffe 56 verwendet.

Eine auf der Vorgelegewelle 60 angeordnete Wechsel-Zahnradkupplung 62 ist zum wahlweisen Ankuppeln zweier benachbarter Zahnräder an die Vorgelegewelle 60 über eine Schaltschiebemuffe 20 verwendet.

Eine auf der Ausgangswelle 14 angeordnete Wechsel-Zahnradkupplung 63 ist zum wahlweisen Ankuppeln zweier benachbarter Zahnräder an die Ausgangswelle 14 über eine Schaltschiebemuffe 10 verwendet.

Eine auf der Ausgangswelle 14 angeordnete Zahnradkupplung 64 ist zum Ankuppeln eines weiteren Zahnrades an die Ausgangswelle 14 über eine Schaltschiebemuffe 52 verwendet.

Die Schaltschiebemuffe 10 wird in der üblichen Weise durch eine Schaltgabel 11 betätigt, welche mit einer Schaltstange 12 einteilig ausgebildet ist.

Die Schaltschiebemuffe 52 wird in der üblichen Weise durch eine Schaltgabel 53 betätigt, welche mit einer Schaltstange 49 einteilig ausgebildet ist.

Das Getriebegehäuse 16 ist in einer Gehäuseebene, welche auf einer mit den Drehachsen von Ausgangswelle 14 und Eingangswelle 25 im Einbauzustand zusammenfallenden Lagerachse 66-66 senkrecht steht, in einen ausgangsseitigen Gehäuseteil 15 und in einen eingangsseitigen Gehäuseteil 27 unterteilt. Der ausgangsseitige Gehäuseteil 15 weist eine zur Lagerachse 66-66 koaxiale Gehäuseöffnung 68 für die Lagerung und für den Durchgang der Ausgangswelle 14 auf. Der eingangsseitige Gehäuseteil 27 weist eine zur Lagerachse 66-66 koaxiale Gehäuseöffnung 69 für die Lagerung und für den Durchgang der Eingangswelle 25 auf.

Das Getriebegehäuse 16 weist eine untere Lagerachse 67-67 auf, mit welcher im Einbauzustand die Drehachse der Vorgelegewelle 60 zusammenfällt. Der ausgangsseitige Gehäuseteil 15 weist ein zur Lagerachse 67-67 koaxiales Lagerauge 15-60 für die Lagerung des benachbarten Endes der Vorgelegewelle 60 auf. Der eingangsseitige Gehäuseteil 27 weist ein zur Lagerachse 67-67 koaxiales Lagerauge 27-60 für die Lagerung des benachbarten Endes der Vorgelegewelle 60 auf.

Das Getriebegehäuse 16 weist eine zur Lagerachse 66-66 parallele Lagerachse 70-70 auf, welche oberhalb der Getriebewellen 14, 25 und 60 liegt, und mit der im Einbauzustand die Drehachse einer Schaltwelle 44 zusammenfällt, welche durch eine Lageranordnung 71 in einem zur Lagerachse 70-70 koaxialen Lagerauge 15-44 des ausgangsseitigen Gehäuseteiles 15 und durch eine Lageranordnung 72 in einem zur Lagerachse 70-70 koaxialen Lagerauge 27-44 des eingangsseitigen Gehäuseteiles 27 jeweils dreh- und axial verschiebbar gegenüber dem Getriebegehäuse 16 gelagert ist.

An dem der Gehäuseöffnung 68 entgegengesetzten Ende des Gehäuseteiles 15 ist ein Lagerschild 35 in einer zur Lagerachse 66-66 senkrechten Gehäuseebene angeordnet. Der oberhalb der Getriebewellen 14, 25, 60 angeordnete Lagerschild 35 ist an dem Gehäuseteil 15 festgeschraubt; zu diesem Zweck weisen der Lagerschild 35 zwei seitliche Befestigungsöffnungen 36 und 37 und der Gehäuseteil 15 korrespondierende Gewindelöcher 15-36 und 15-37 auf.

Das Getriebegehäuse 16 weist eine Lagerachse 73-73 auf, welche oberhalb und parallel zur Lagerache 66-66 liegt. Im Einbauzustand ist die Schaltstange 12 entlang dieser Lagerachse 73-73 gegenüber dem Getriebegehäuse 16 verschiebbar gelagert. Zu diesem Zweck ist das eine Ende der Schaltstange 12 über eine Lageranordnung 18 in einem zur Lagerachse 73-73 koaxialen Lagerauge 15-12 des ausgangsseitigen Gehäuseteiles 15 und über eine Lageranordnung 19 in einem zur Lagerachse 73-73 koaxialen Lagerauge 35-12 des Lagerschildes 35 abgestützt. Die Schaltstange 12 durchsetzt Lageranordnung 19 und Lagerschild 35 und weist an ihrem zur Lageranordnung 18 entgegengesetzten Ende eine Schaltnut 74 für den Eingriff eines Schaltfingers 75 der Schaltwelle 44 auf. Die Stellungen der Schaltstange 12 für den eingerückten und den ausgerückten Zustand der zugehörigen Zahnradkupplung 63 sind gegenüber dem Getriebegehäuse 16 durch eine Rasteneinrichtung 48 fixierbar, bei welcher eine in einer korrespondierenden Aufnahme 35-48 des Lagerschildes 35 angeordnete federnde Raste 85 mit einer korrespondierenden Rastenkontur der Schaltstange 12 zusammenarbeitet.

Das Getriebegehäuse 16 weist eine Lagerachse 76-76 auf, welche oberhalb und parallel zur Lagerache 66-66 liegt. Im Einbauzustand ist die Schaltstange 49 entlang dieser Lagerachse 76-76 gegenüber dem Getriebegehäuse 16 axial verschiebbar gelagert. Zu diesem Zweck ist die Schaltstange 49 an ihrem einen Ende durch eine Lageranordnung 77 in einem zur Lagerachse 76-76 koaxialen Lagerauge 15-49 des ausgangsseitigen Gehäuseteiles 15 und durch eine Lageranordnung 78 in einem zur Lagerachse 76-76 koaxialen Lagerauge 35-49 des Lagerschildes 35 abgestützt. Die Schaltstange 49 durchsetzt Lageranordnung 78 und Lagerschild 35 und weist an ihrem zur Lageranordnung 77 entgegengesetzten Ende eine Schaltnut 79 für den Eingriff eines Schaltfingers 80 der Schaltwelle 44 auf. Die Stellungen der Schaltstange 49 für den eingerückten und den ausgerückten Zustand der zugehörigen Zahnradkupplung 64 sind durch eine Rasteneinrichtung 51 gegenüber dem Getriebegehäuse 16 fixierbar. Für diese Einrichtung ist ein in eine zugehörige Gehäuseöffnung 15-54 des ausgangsseitigen Gehäuseteiles 15 eingesetzter Rückfahrlichtschalter 54 verwendet, dessen Schaltkontakt 86 als federnde Raste mit einer korrespondierenden Rastenkontur 87 der Schaltstange 49 zusammenarbeitet.

Der Schaltgehäuseeinsatz 35 weist zwei trägerförmige Lagerkonsolen 28 und 29 auf, welche beiderseits der Schaltschiebemuffen 20 und 56 und in Längsrichtung der Getriebewellen 14, 25 und 60 angeordnet sind.

Die Lagerkonsole 28 weist an ihrem einen Ende sowohl einen nasenartigen Ansatz 42 zu ihrer Fixierung gegenüber dem den Durchgang 36 aufweisenden Teil 40 des Lagerschildes 35 als auch einen Befestigungswinkel 81 mit einem Schraubendurchgang 38 zu ihrer Schraubbefestigung an dem Gehäuseteil 15 auf, welch letzterer zu diesem Zweck mit einem Gewindeloch 15-38 versehen ist.

Die Fixierung der Lagerkonsole 28 über ihren Ansatz 42 gegenüber dem Lagerschild 35 oder die Schraubbefestigung der Lagerkonsole 28 über ihren Befestigungswinkel 81 mit dem Schraubendurchgang 38 gegenüber dem Gehäuseteil 15 können wahlweise vorgesehen sein.

Die Lagerkonsole 29 weist an ihrem einen Ende sowohl einen nasenartigen Ansatz 43 zu ihrer Fixierung gegenüber dem den Durchgang 37 aufweisenden Teil 41 des Lagerschildes 35 als auch einen Befestigungswinkel 82 mit einem Schraubendurchgang 39 zu ihrer Schraubbefestigung gegenüber dem Gehäuseteil 15 auf, welch letzterer zu diesem Zweck mit einem Gewindeloch 15-39 versehen ist.

Die Fixierung der Lagerkonsole 29 über ihren Ansatz 43 gegenüber dem Lagerschild 35 oder die Schraubbefestigung der Lagerkonsole 28 über ihren Befestigungswinkel 82 mit dem Schraubendurchgang 39 gegenüber dem Gehäuseteil 15 können wahlweise vorgesehen sein.

Die Lagerkonsolen 28 und 29 sind an einer in den Längsrichtungen der Getriebewellen 14, 25 und 60 zwischen den Schaltschiebemuffen 22 und 56 liegenden Stelle untereinander durch eine trägerförmige Traverse 30 starr verbunden.

Der eingangsseitige Gehäuseteil 27 des Getriebegehäuses 16 weist für die zugekehrten Enden der Lagerkonsolen 28 und 29 jeweils eine Abstützung 31 und 32 in Form von Lageraugen auf, in welchen korrespondierende Führungszapfen 33 und 34 der Lagerkonsolen axial gleitend geführt sind.

Die Schaltschiebemuffe 20 wird in der üblichen Weise durch eine Schaltgabel 21 über zwei Gleitsteine betätigt, welche mit einer Schaltschwinge 22 einteilig ausgebildet ist, die ihrerseits an einer zwischen Traverse 30 und Lagerschild 35 liegenden Stelle um eine zu den Getriebewellen 14, 25, 60 senkrecht ausgerichtete geometrische Schwenkachse 26-26 durch zwei koaxiale Schwenklager 23 und 24 an den Lagerkonsolen 28 und 29 schwenkbar gelagert ist. Gegenüber der Schaltschwinge 22 ist ein Mitnehmer 83 bewegungsfest angeordnet, welcher eine Schaltnut 84 für den Eingriff des Schaltfingers 80 der Schaltwelle 44 aufweist. Die Stellungen der Schaltgabel 21 für den eingerückten und den ausgerückten Zustand der zugehörigen Zahnradkupplung 62 sind durch eine Rasteneinrichtung 47 gegenüber dem Getriebegehäuse 16 fixierbar. Die Rasteneinrichtung 47 weist eine an der Lagerkonsole 28 befestigte Aufnahme 28-47 für eine federbelastete Rastenkugel 85 auf, welche mit einer korrespondierenden Rastenkontur 21-47 der Schaltgabel 21 zusammenarbeitet.

Die Schaltschiebemuffe 56 wird in der üblichen Weise durch eine Schaltgabel 55 über zwei Gleitsteine betätigt, welche zu einer Schaltschwinge 50 bewegungsfest angeordnet ist. Die Schaltschwinge 50 ist an einer zwischen der Traverse 30 und den Abstützungen 31, 32 (Führungszapfen 33 und 34) liegenden Stelle um eine senkrecht zu den Getriebewellen 14, 25, 60 ausgerichtete geometrische Achse 13-13 durch zwei koaxiale Schwenklager 58 und 59 an den Lagerkonsolen 28 und 29 schwenkbar gelagert. Die Schaltschwinge 50 ist mit einem Mitnehmer 88 bewegungsfest verbunden, welcher eine Schaltnut 89 für den Eingriff eines Schaltfingers 90 der Schaltwelle 44 aufweist. Die Stellungen der Schaltgabel 55 für den eingerückten und den ausgerückten Zustand der zugehörigen Zahnradkupplung 61 sind durch eine Rasteneinrichtung 57 gegenüber dem Getriebegehäuse 16 fixierbar. Die Rasteneinrichtung 57 weist eine an der Lagerkonsole 28 gehalterte Aufnahme 28-57 für eine federbelastete Rastenkugel 85 auf, welche mit einer korrespondierenden Rastenkontur 55-57 an der Schaltgabel 55 zusammenarbeitet.

Die Traverse 30 ist mit einer Rasteneinrichtung 45 für die den Schaltbewegungen zugehörigen Stellungen der Schaltwelle 44 versehen. Zu diesem Zweck ist an der Traverse 30 eine Konsole 91 feststehend angeordnet, an welcher eine gehäuseartige Aufnahme 30-45 für eine federbelastete Rastenkugel 85 gehaltert ist. Die Rastenkugel 85 der Rasteneinrichtung 45 arbeitet mit einem bewegungsfest zur Schaltwelle 44 angeordneten Rastensegment 44-45 zusammen.

Schließlich ist die Traverse 30 noch mit einer Rasteneinrichtung 46 für die den Wählbewegungen zugeordneten Stellungen der Schaltwelle 44 versehen. Zu diesem Zweck ist an der Traverse 30 eine Konsole 92 feststehend angeordnet, an welcher eine gehäuseartige Aufnahme 30-46 für eine federbelastete Rastenkugel 85 gehaltert ist. Die Rastenkugel 85 der Rasteneinrichtung 46 arbeitet mit einem bewegungsfest zur Schaltwelle 44 angeordneten Rastensegment 44-46 zusammen.

## Patentansprüche

1. Schaltvorrichtung für ein Zahnräderwechselgetriebe mit einer ersten Zahnradkupplung zum Ankuppeln eines Zahnrades an seine Getriebewelle, mit einer Schaltgabel (11) zum Betätigen der ersten Zahnradkupplung, mit einer achsparallel zur Getriebewelle angeordneten Schaltstange (12), welche gegenüber der Schaltgabel (11) bewegungsfest angeordnet und mit ihrem einen Ende gegenüber einem ersten Gehäuseteil (15) eines zweigeteilten Getriebegehäuses (16) sowie an einer weiteren Stelle gegenüber einem lösbar an dem ersten Gehäuseteil (15) befestigten Schaltgehäuseeinsatz (17) jeweils durch eine Lageranordnung (18, 19) axial verschiebbar gelagert ist, mit einer zweiten Zahnradkupplung zum Ankuppeln eines Zahnrades an seine Getriebewelle, mit einer zum Betätigen der zweiten Zahnradkupplung verwendeten Schaltschwinge (22), welche durch zwei koaxiale Schwenklager (23, 24) um eine senkrecht zu den Getriebewellen (14, 25) ausgerichtete geometrische Schwenkachse (26-26) schwenkbar gegenüber dem zweiten Gehäuseteil des Getriebegehäuses gelagert ist,
**dadurch gekennzeichnet,**
daß der Schaltgehäuseeinsatz (17) zwei sowohl beiderseits der Schaltschwinge (22) als auch in Längsrichtung der Getriebewellen (14,25) angeordnete trägerförmige Lagerkonsolen (28,29) aufweist, daß der Schaltgehäuseeinsatz (17) an einer zu der Lageranordnung (19) für die Schaltstange (12) in Längsrichtung der Getriebewellen (14,25) versetzt liegenden Stelle eine trägerförmige Traverse (30) aufweist, welche quer zu den Getriebewellen (14,25) angeordnet und zur bewegungsfesten Anordnung der beiden Lagerkonsolen (28,29) relativ zueinander verwendet ist, daß die beiden Schwenklager (23,24) an je einer der Lagerkonsolen (28,29) angeordnet sind, und daß das zu der Lageranordnung (19)für die Schaltstange (12) entgegengesetzt liegende Ende des Schaltgehäuseeinsatzes (17) durch wenigstens eine lösbare Abstützung (31,32) gegenüber dem zweiten Gehäuseteil (27) zumindest in den zu den Getriebewellen (14,25) senkrechten Richtungen fixierbar ist.

2. Schaltvorrichtung nach Anspruch 1,
**dadurch gekennzeichnet,**
daß für die Abstützung je ein achsparallel zu den Getriebewellen (14, 25) angeordneter Führungszapfen (33, 34) der Lagerkonsolen (28, 29) verwendet ist.

3. Schaltvorrichtung nach Anspruch 1 oder 2,
**dadurch gekennzeichnet,**
daß der Schaltgehäuseeinsatz (17) einen die Lageranordnung (19) für die Schaltstange (12) tragenden Lagerschild (35) aufweist, welcher in einer zu den Getriebewellen (14, 25) senkrechten Gehäuseebene sowie zu den Lagerkonsolen (28, 29) im wesentlichen bewegungsfest angeordnet ist.

4. Schaltvorrichtung nach einem der Ansprüche 1 bis 3 ,
**dadurch gekennzeichnet,**
daß wenigstens eine von zwei Befestigungen (36 bis 39) zwischen dem Schaltgehäuseeinsatz (17) und dem die Schaltstange (12) lagernden ersten Gehäuseteil (15) des Getriebegehäuses (16) vorgesehen ist,und daß der erste Gehäuseteil (15) durch die eine Befestigung (36 bzw.37)mit dem mit einer Lagerkonsole (28 bzw.29)verbundenen Teil (40 bzw. 41) des Lagerschildes (35)und durch die andere Befestigung (38 bzw. 39) mit dem mit dem Lagerschild (35) verbundenen Teil (42 bzw. 43) einer Lagerkonsole (28 bzw. 29)verbunden ist.

5. Schaltvorrichtung nach einem der Ansprüche 1 bis 4,
**dadurch gekennzeichnet,**
daß eine den Wählbewegungen einer zum Betätigen der Schaltstange (12) und der Schaltschwinge (22) verwendeten Schaltwelle (44) zugeordnete Rasteneinrichtung (45) an der Traverse (30) angeordnet ist.

6. Schaltvorrichtung nach einem der Ansprüche 1 bis 5,
**dadurch gekennzeichnet,**
daß eine den Schaltbewegungen einer zum Betätigen der Schaltstange (12) und der Schaltschwinge (22) verwendeten Schaltwelle (44) zugeordnete Rasteneinrichtung (46) an der Traverse (30) angeordnet ist.

7. Schaltvorrichtung nach einem der Ansprüche 1 bis 6,
**dadurch gekennzeichnet,**
daß eine den Stellungen der Schaltschwinge (22) zugeordnete Rasteneinrichtung (47) an einer Lagerkonsole (28) angeordnet ist.

8. Schaltvorrichtung nach einem der Ansprüche 1 bis 7,
**dadurch gekennzeichnet,**
daß eine den Stellungen der Schaltstange (12) zugeordnete Rasteneinrichtung (48) am Lagerschild (35) angeordnet ist.

9. Schaltvorrichtung nach einem der Ansprüche 1 bis 8,
**dadurch gekennzeichnet,**
daß die Lagerkonsolen (28 und 29) und die Traverse (30) sowie der Lagerschild (35) einen vormontierbaren in sich starren Rahmen (Schaltgehäuseeinsatz 17) bilden.

10. Schaltvorrichtung nach einem der Ansprüche 1 bis 9,
**dadurch gekennzeichnet,**
daß die Lagerkonsolen (28 und 29) und die Traverse (30) sowie der Lagerschild (35) in Blechpreßtechnik hergestellt sind.

11. Schaltvorrichtung nach einem der Ansprüche 1 bis 10,
**dadurch gekennzeichnet,**
daß gegenüber dem Schaltgehäuseeinsatz (17) und dem zugehörigen einen Gehäuseteil (15) des Getriebegehäuses (16) wenigstens eine zusätzliche Schaltstange (49) entsprechend gelagert ist.

12. Schaltvorrichtung nach Anspruch 11,
**dadurch gekennzeichnet,**
daß eine den Stellungen einer zusätzlichen Schaltstange (49) zugeordnete Rasteneinrichtung (51) an dem die Schaltstange (49) lagernden Gehäuseteil (15) des Getriebegehäuses (16) angeordnet ist.

13. Schaltvorrichtung nach Anspruch 12,
**dadurch gekennzeichnet,**
daß eine zusätzliche Schaltstange (49) zum Betätigen der dem Rückwärtsgang zugehörigen Zahnradkupplung (64) verwendet ist, und daß als federnde Raste für die dem Rückwärtsgang zugehörige Stellung der zusätzlichen Schaltstange (49) der Schaltkontakt (86) eines in den die zusätzliche Schaltstange (49) lagernden Gehäuseteil (15) des Getriebegehäuses (16) eingesetzten Rückfahrlichtschalters (54) verwendet ist.

14. Schaltvorrichtung nach einem der Ansprüche 1 bis 13,
**dadurch gekennzeichnet,**
daß die Lagerkonsolen (28, 29) zur entsprechenden Lagerung (58, 59) wenigstens einer zusätzlichen Schaltschwinge (50) verwendet sind.

15. Schaltvorrichtung nach Anspruch 14,
**dadurch gekennzeichnet,**
daß eine den Stellungen einer zusätzlichen Schaltschwinge (50) zugeordnete Rasteneinrichtung (57) an einer Lagerkonsole (28) angeordnet ist.

16. Schaltvorrichtung nach einem der Ansprüche 1 bis 15,
**dadurch gekennzeichnet,**
daß die Lagerkonsolen (28, 29), die Traverse (30), der Lagerschild (35), die Schaltstangen (12, 49), die Schaltschwingen (22, 50) und die Rasteneinrichtungen (45 bis 48 und 57) als eine vormontierbare Baueinheit ausgebildet sind.

## Claims

1. Shift actuator for a change-speed gearbox with a first gearwheel clutch for coupling a gearwheel to its gearbox shaft, with a shift fork (11) for actuating the first gearwheel clutch, with a shift rod (12), which is arranged parallel to the axis of the gearbox shaft and fixed in terms of motion relative to the shift fork (11) and is supported by means of respective bearing arrangements (18, 19) so as to be axially displaceable relative to a first housing part (15) of a two-part gearbox housing (16) at one end and axially displaceable relative to a shift housing insert (17), which is secured releasably on the first housing part (15), at another point, with a second gearwheel clutch for coupling a gearwheel to its gearbox shaft, with a shift rocker (22), which is used to actuate the second gearwheel clutch and is supported relative to the second housing part of the gearbox housing by two coaxial pivot bearings (23, 24) so as to be pivotable relative to the second housing part of the gearbox housing about a geometric pivoting axis (26-26) aligned perpendicular to the gearbox shafts (14, 25), characterized in that the shift housing insert (17) has two beam-shaped bearing brackets (28, 29) arranged both on each side of the shift rocker (22) and in the longitudinal direction of the gearbox shafts (14, 25), in that, at a point offset in the longitudinal direction of the gearbox shafts (14, 25) relative to the bearing arrangement (19) for the shift rod (12), the shift housing insert (17) has a beam-shaped crossmember (30) which is arranged transversely to the gearbox shafts (14, 25) and is used to arrange the two bearing brackets (28, 29) relative to one another in a manner fixed in terms of motion, in that the two pivot bearings (23, 24) are each arranged on one of the bearing brackets (28, 29), and in that that end of the shift housing insert (17) which is remote from the bearing arrangement (19) for the shift rod (12) can be fixed relative to the second housing part (27) at least in the directions perpendicular to the gearbox shafts (14, 25) by means of at least one releasable support (31, 32).

2. Shift actuator according to Claim 1, characterized in that respective guide journals (33, 34) of the bearing brackets (28, 29), said guide journals being arranged parallel to the axes of the gearbox shafts (14, 25), are used for support.

3. Shift actuator according to Claim 1 or 2, characterized in that the shift housing insert (17) has a bearing plate (35), which supports the bearing arrangement (19) for the shift rod (12) and is arranged essentially fixed in terms of motion relative to the bearing brackets (28, 29), in a housing plane perpendicular to the gearbox shafts (14, 25).

4. Shift actuator according to one of Claims 1 to 3, characterized in that at least one of two fastenings (36 to 39) is provided between the shift housing insert (17) and that first housing part (15) of the gearbox housing (16) which supports the shift rod (12), and in that the first housing part (15) is connected by one fastening (36 or 37) to that part (40 or 41) of the bearing plate (35) which is connected to one bearing bracket (28 or 29) and by the other fastening (38 or 39) to that part (42 or 43) of a bearing bracket (28 or 29) which is connected to the bearing plate (35).

5. Shift actuator according to one of Claims 1 to 4, characterized in that a detent device (45) associated with the selecting movements of a shifting shaft (44) used to actuate the shift rod (12) and the shift rocker (22) is arranged on the crossmember (30).

6. Shift actuator according to one of Claims 1 to 5, characterized in that a detent device (46) associated with the shifting movements of a shifting shaft (44) used to actuate the shift rod (12) and the shift rocker (22) is arranged on the crossmember (30).

7. Shift actuator according to one of Claims 1 to 6, characterized in that a detent device (47) associated with the positions of the shift rocker (22) is arranged on a bearing bracket (28).

8. Shift actuator according to one of Claims 1 to 7, characterized in that a detent device (48) associated with the positions of the shift rod (12) is arranged on the bearing plate (35).

9. Shift actuator according to one of Claims 1 to 8, characterized in that the bearing brackets (28 and 29), the crossmember (30) and the bearing plate (35) form an intrinsically rigid frame (shift housing insert 17) that can be preassembled.

10. Shift actuator according to one of Claims 1 to 9, characterized in that the bearing brackets (28 and 29), the crossmember (30) and the bearing plate (35) are produced by pressing sheet metal.

11. Shift actuator according to one of Claims 1 to 10, characterized in that at least one additional shift rod (49) is supported in an appropriate manner relative to the shift housing insert (17) and the associated first housing part (15) of the gearbox housing (16).

12. Shift actuator according to Claim 11, characterized in that a detent device (51) associated with the positions of an additional shift rod (49) is arranged on that housing part (15) of the gearbox housing (16) which supports the shift rod (49).

13. Shift actuator according to Claim 12, characterized in that an additional shift rod (49) for actuating the gearwheel clutch (64) associated with reverse gear is used, and in that the switching contact (86) of a reversing light switch (54) inserted into that housing part (15) of the gearbox housing (16) which supports the additional shift rod (49) is used as a spring detent for that position of the additional shift rod (49) which is associated with reverse gear.

14. Shift actuator according to one of Claims 1 to 13, characterized in that the bearing brackets (28, 29) are used to provide appropriate support (58, 59) for at least one additional shift rocker (50).

15. Shift actuator according to Claim 14, characterized in that a detent device (57) associated with the positions of an additional shift rocker (50) is arranged on a bearing bracket (28).

16. Shift actuator according to one of Claims 1 to 15, characterized in that the bearing brackets (28, 29), the crossmember (30), the bearing plate (35), the shift rods (12, 49), the shift rockers (22, 50) and the detent devices (45 to 48 and 57) are designed as a preassemblable unit.

## Revendications

1. Dispositif de manoeuvre pour une boîte de vitesses à roues dentées, comportant un premier accouplement à roues dentées pour assurer l'accouplement d'une roue dentée à son arbre de boîte de vitesses, avec une fourchette de manoeuvre (11) pour l'actionnement du premier accouplement à roues dentées, avec une tige de manoeuvre (12) disposée parallèlement à l'axe de l'arbre de boîte de vitesses, tige rendue solidaire de la fourche de manoeuvre (11), et montée déplaçable axialement, par une première extrémité de celle-ci, par rapport à une première partie de carter (15) d'un carter de boîte de vitesses (16) divisé en deux, ainsi que, en un autre emplacement, par rapport à un insert de boîte de vitesses (17) fixé de façon désolidarisable sur la première partie de carter (15), chaque fois par l'intermédiaire d'un agencement de palier (18, 19), avec un deuxième accouplement à roues dentées pour l'accouplement d'une roue dentée à son arbre de boîte de vitesses, avec un levier oscillant de manoeuvre (22) utilisé pour actionner le deuxième accouplement à roues dentées, levier oscillant monté, au moyen de deux paliers de pivotement (23, 24) coaxiaux, de façon à pouvoir pivoter autour d'un axe de pivotement géométrique (26-26) perpendiculaire aux arbres de boîte de vitesses (14, 25), le pivotement se faisant par rapport à la deuxième partie de carter de la boîte de vitesses,
caractérisé en ce que
l'insert de boîte de vitesses (17) présente deux consoles de palier (28, 29) en forme de poutre disposées, tant des deux côtés du levier oscillant de manoeuvre (22) qu'également dans la direction longitudinale des arbres de boîte de vitesses (14, 15), en ce que l'insert de boîte de vitesses (17) présente, en un emplacement décalé dans la direction longitudinale des arbres de boîte de vitesses (14, 25) par rapport à l'agencement de palier (19) de la tige de manoeuvre (12), une traverse (30) en forme de poutre, qui est disposée transversalement par rapport aux arbres de boîte de vitesses (14, 25) et qui est utilisée pour obtenir un agencement assujetti en déplacement des deux consoles de palier (28, 29) l'une par rapport à l'autre, en ce que les deux paliers de pivotement (23, 24) sont disposés chacun sur l'une des consoles (28, 29), et en ce que l'extrémité, opposée à l'agencement de palier (19) prévue pour la tige de manoeuvre (12), de l'insert de boîte de vitesses (17) est susceptible d'être fixée, au moins dans les directions perpendiculaires aux arbres de boîte de vitesses (14, 25), à l'aide d'au moins un appui (31, 32) désolidarisable, par rapport à la deuxième partie de carter (27).

2. Dispositif de manoeuvre selon la revendication 1, caractérisé en ce qu'un tourillon de guidage (33, 34), disposé parallèlement à l'axe des arbres de boîte de vitesses (14, 25) et appartenant aux consoles de palier (28, 29), est utilisé pour assurer l'appui.

3. Dispositif de manoeuvre selon la revendication 1 ou 2, caractérisé en ce que l'insert de boîte de vitesses (17) présente un flasque de palier (35) portant l'agencement de palier (19) de la tige de manoeuvre (12), flasque de palier disposé pratiquement bloqué contre tout déplacement dans un plan de carter perpendiculaire aux arbres de boîte de vitesses (14, 25), ainsi que par rapport aux consoles de palier (28, 29).

4. Dispositif de manoeuvre selon l'une quelconque des revendications 1 à 3, caractérisé en ce qu'au moins l'une des deux fixations (36 à 39) est prévue entre l'insert de boîte de vitesses (17) et la première partie de carter (15), servant de palier à la tige de manoeuvre (12), du carter de boîte de vitesses (16), et en ce que la première partie de carter (15) est reliée, par une fixation (36, 37), à la partie (40 ou 41) reliée à une console de palier (28 ou 29), du flasque de palier (35) et est reliée, par l'autre fixation (38 ou 39), à la partie (42 ou 43), reliée au flasque de palier (35), d'une console de palier (28 ou 29)

5. Dispositif de manoeuvre selon l'une quelconque des revendications 1 à 4, caractérisé en ce qu'un dispositif d'encliquetage (45), associé aux déplacements de sélection d'un arbre de manoeuvre (44) utilisé pour l'actionnement de la tige de manoeuvre (12) et du levier oscillant de manoeuvre (22), est disposé sur la traverse (30).

6. Dispositif de manoeuvre selon l'une quelconque des revendications 1 à 5, caractérisé en ce qu'un dispositif d'encliquetage (46), associé aux déplacements de manoeuvre d'un arbre de manoeuvre (44) utilisé pour l'actionnement de la tige de manoeuvre (12) et du levier oscillant de manoeuvre (22), est disposé sur la traverse (30).

7. Dispositif de manoeuvre selon l'une quelconque des revendications 1 à 6, caractérisé en ce qu'un dispositif d'encliquetage (47), associé aux positions du levier oscillant de manoeuvre (22), est disposé sur une console de palier (28).

8. Dispositif de manoeuvre selon l'une quelconque des revendications 1 à 7, caractérisé en ce qu'un dispositif d'encliquetage (48), associé aux positions de la tige de manoeuvre (12), est disposé sur le flasque de palier (35) .

9. Dispositif de manoeuvre selon l'une quelconque des revendications 1 à 8, caractérisé en ce que les consoles de palier (28 et 29) et la traverse (30), ainsi que le flasque de palier (35), constituent un cadre susceptible d'être prémonté, rigide en soi (insert de carter de manoeuvre 17).

10. Dispositif de manoeuvre selon l'une quelconque des revendications 1 à 9, caractérisé en ce que les consoles de palier (28 et 29) et la traverse (30), ainsi que le flasque de palier (35) sont fabriqués suivant une technique d'emboutissage de tôle.

11. Dispositif de manoeuvre selon l'une quelconque des revendications 1 à 10, caractérisé en ce qu'au moins une tige de manoeuvre (49) supplémentaire est montée de manière correspondante par rapport à l'insert de carter de manoeuvre (17) et par rapport à la partie de carter (15) afférente du carter de boîte de vitesses (16).

12. Dispositif de manoeuvre selon la revendication 11, caractérisé en ce qu'un dispositif d'encliquetage (51), associé aux positions d'une tige de manoeuvre (49) supplémentaire, est disposé sur la partie de carter (15), servant de palier à la tige de manoeuvre (49), du carter de boîte de vitesses (16).

13. Dispositif de manoeuvre selon la revendication 12, caractérisé en ce qu'une tige de manoeuvre (49) supplémentaire est utilisée pour actionner l'accouplement à roues dentées (64) afférent à la marche arrière, et en ce que, à titre de cliquet élastique pour la position afférente à la marche arrière de la tige de manoeuvre (49) supplémentaire, est utilisé le contact de commutation (86) d'un interrupteur de feux de marche arrière (54) inséré dans la partie de carter (15), servant de palier à la tige de manoeuvre (49) supplémentaire, du carter de boîte de vitesses (16).

14. Dispositif de manoeuvre selon la revendication 13, caractérisé en ce que les consoles de palier (28, 29) sont utilisées pour assurer le montage tourillonnant (58, 59) correspondant d'au moins un levier oscillant de manoeuvre (50) supplémentaire.

15. Dispositif de manoeuvre selon la revendication 14, caractérisé en ce qu'un dispositif d'encliquetage (57), associé aux positions d'un levier oscillant de manoeuvre (50) supplémentaire, est disposé sur une console de palier (28).

16. Dispositif de manoeuvre selon l'une des revendications 1 à 15, caractérisé en ce que les consoles de palier (28, 29), la traverse (30), le flasque de palier (35), les tiges de manoeuvre (12, 49), les leviers oscillants de manoeuvre (22, 50) et les dispositifs d'encliquetage (45 à 48 et 57) sont réalisés sous la forme d'un ensemble de construction pré-montable.
